# EUROPEAN PATENT SPECIFICATION

(11) **EP 3 676 736 B1**
(45) Date of publication and mention of the grant of the patent: **14.10.2026**
(21) Application number: 18850695.0
(22) Date of filing: 27.08.2018
(51) Int. Cl.: G06F 21/57

(54) **MANAGING DATA EXFILTRATION RISK**
VERWALTUNG DES DATENEXFILTRATIONSRISIKOS
GESTION DU RISQUE D'EXFILTRATION DE DONNÉES

(30) Priority: 31.08.2017 US 201762552438 P
(43) Date of publication of application: 08.07.2020
(73) Proprietor: Proofpoint, Inc., Sunnyvale, CA 94085 (US)
(72) Inventor: TIETZ, Oded, Sunnyvale, CA 94085 (US); CHOUDHARY, Mayank, Sunnyvale, CA 94085 (US); BARAK, Nir, Sunnyvale, CA 94085 (US); OLAND, Micky, Sunnyvale, CA 94085 (US); SHEMESH, Tal, Sunnyvale, CA 94085 (US); MESHULAM, Yigal, Sunnyvale, CA 94085 (US); CALIF, Lior, Sunnyvale, CA 94085 (US)
(74) Representative: Mewburn Ellis LLP
(86) International application number: PCT/US2018/048055
(87) International publication number: WO 2019/046147

(56) References cited:
- US-A1- 2003 182 583
- US-A1- 2012 233 222
- US-A1- 2013 097 709
- US-A1- 2014 157 407
- US-A1- 2015 205 962
- US-A1- 2016 065 601
- US-B1- 9 043 905
- US-B1- 9 641 544

## Description

### CROSS REFERENCE TO RELATED APPLICATION

The present application claims the benefit of U.S. Provisional Patent Application No. 62/552,438, entitled MANAGING DATA EXFILTRATION RISK, which was filed on August 31,2017.

### FIELD OF THE INVENTION

This disclosure relates to managing data exfiltration risk and, more particularly, managing data exfiltration risk in a computer network (e.g., for an organization).

### BACKGROUND

Data exfiltration is the unauthorized transfer of data from a computer. Such a transfer may be manual and carried out by someone with physical access to a computer in a network. Data exfiltration, particularly when done by an insider (e.g., an organization's own employee), can be a huge threat to an organization. US 2015/205962 A1 is relevant prior art.

### SUMMARY OF THE INVENTION

The scope of the invention is defined by the independent claims.

In one aspect, a computer-based method is disclosed to facilitate managing data exfiltration risk in a computer network environment. The method includes collecting computer file management information associated with each respective one of a plurality of computer files in an organization's computer network environment from a computer operating system, collecting user activity information associated with each respective one of a plurality of user sessions by users having access to the organization's computer network environment with a plurality of session monitoring agents, correlating at least some of the collected user activity information to one or more of the computer files associated with the collected file management information; and assessing data exfiltration risk with respect to one or more of the computer files based at least in part on some of the file management information and the correlated user activity information.

In a typical implementation, the computer-based method includes presenting an alert to one or more particular system users (e.g., system administrators), if the assessment reveals that the data exfiltration risk exists with respect to any one or more of the computer files, and/or preventing a user action that would result in a data exfiltration associated with one of the computer files, if the assessment reveals that the data exfiltration risk exists with respect to that computer file.

The exfiltration risk typically is assessed without regard to content in any of the one or more computer files.

In another aspect, a computer system is disclosed that facilitates managing data exfiltration risk in a computer network environment. The computer system includes a plurality of computer-based user access devices and resources within a computer network that has a firewall, an operating system to support computer operations within the computer network, and an exfiltration detection and response system configured to interact with the operating system, and to facilitate managing data exfiltration risk in the computer network.

The data exfiltration system includes a file interceptor to receive computer file management information associated with each respective one of a plurality of computer files in the computer network from the operating system, one or more session-monitoring agents to collect user activity information associated with each respective one or more user sessions on the computer network by users having access to the computer network, a history and exfiltration tracker to correlate at least some of the collected user activity information to one or more of the computer files associated with the file management information received from the operating system, and a rules engine to assess exfiltration risk with respect to one or more of the computer files based at least in part on some of the file management information and the correlated user activity information.

In some implementations, one or more of the following advantages are present.

Data exfiltration can be identified either as it is happening or very shortly thereafter. The user implementing the data exfiltration, or attempting to implement the data exfiltration, can be stopped and/or prevented from performing other actions on the network - at least until a person in some authority (e.g., a system administrator or the like) can assess the situation to determine the real risk and whether the user was acting maliciously. Along those lines, the person in authority can be alerted to the data exfiltration immediately - either as it is happening or shortly thereafter. This enables that person to take immediate and timely action to remedy any potential damage. The user attempting to exfiltrate the data can be notified as well that his or her actions are not permissible. A clear and complete record of the data exfiltration, including the identity of the involved user and exactly what the user did is created and stored for later analysis.

All of this typically happens automatically (e.g., once the system is up and running, it monitors and blocks/reports without requiring further involvement, aside from perhaps routine maintenance) from a system administrator.

Moreover, the techniques and technologies disclosed herein are light, from a processing perspective. That is, they require relatively little in terms of processing resources. They are quick, reliable and robust as well.

In short, the techniques and technologies disclosed herein have the potential to significantly prevent, deter, and/or minimize the detrimental effects associated with data exfiltration in an organization's computer network.

Other features and advantages will be apparent from the description and drawings, and from the claims.

### BRIEF DESCRIPTION OF THE DRAWINGS

FIG. 1 is an exemplary computer network environment that includes part of a computer network with a firewall that restricts communications between the computer network and other computer resources and devices outside of the computer network and an exfiltration detection and response system.
FIG. 2 is a schematic representation showing part of the computer network in FIG. 1, with a particularly detailed, yet exemplary, representation of the exfiltration detection and response system.
FIGS. 3-9 are exemplary screenshots showing functionalities associated with the exfiltration detection and response system that might be viewable by a system administrator, or the like, from one or more of the user access devices in FIG. 1.

Like reference characters refer to like elements.

### DETAILED DESCRIPTION

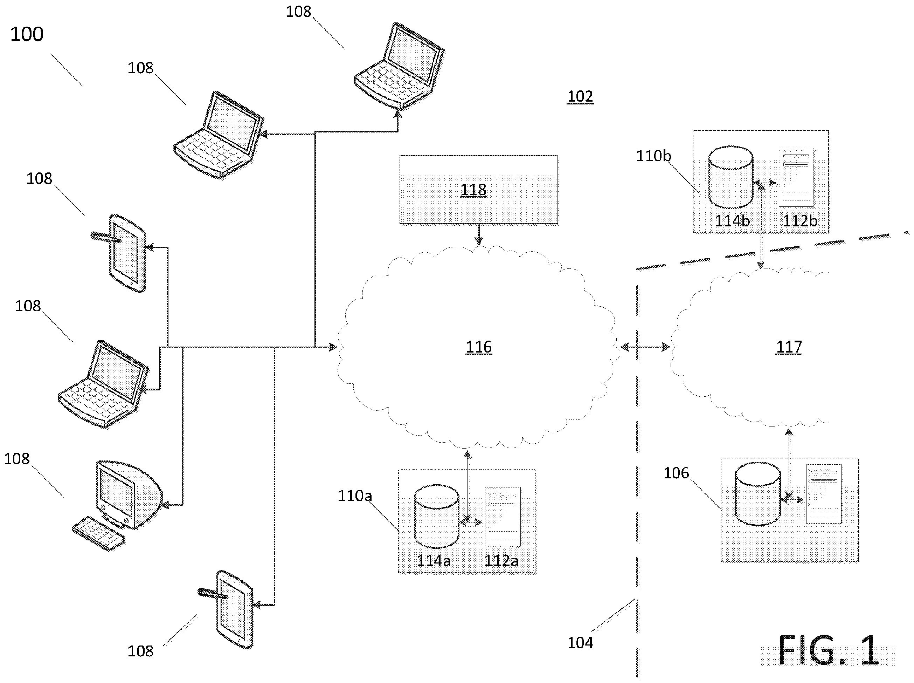

FIG. 1 is an exemplary computer network environment 100 that includes part of a computer network 102 with a firewall 104 that restricts communications between the computer network 102 and other computer resources and devices 106 (e.g., via the Internet 117) outside of the computer network 102.

The part of the computer network 102 represented in the illustrated implementation includes a plurality of computer devices 108 (e.g., computer-based user-access devices), from which an appropriately authorized user can access one or more of the organization's computer-based resources (e.g., programs, files, etc.) within the firewall 104. These resources can be stored or hosted locally (e.g., at a local host 110a that includes processing 112a and memory storage 114a capabilities) or remotely (e.g., at remotely-located host 110b that includes processing 112b and memory storage 114b capabilities). According to the illustrated implementation, the resources at the local host 110a can be accessed by an authorized user from any one of the plurality of computer devices 108, via a local area network 116. Moreover, according to the illustrated implementation, the resources at the remote host 110b can be accessed by an authorized user from any one of the plurality of computer devices 108, via the local area network 116 and the Internet 117.

The computer network 102 in the illustrated implementation has an exfiltration detection and response system 118 that is configured to facilitate managing data exfiltration risk in the computer network 102. More particularly, in this regard, the exfiltration detection and response system 118 is configured to detect and respond to any scenarios that might occur during network operations that indicate or suggest that a data exfiltration event has occurred or is about to occur. Data exfiltration refers generally to the unauthorized removal or copying of a computer file, or its contents, for example, to outside of the organization's computer network 102 (e.g., beyond the confines of the firewall 104). Data exfiltration risk refers generally to the possibility that some kind of data exfiltration either has occurred or is about to occur and has potential to harm the organization.

The exfiltration detection and response system 118 may take into account any one or more of a variety of different factors to determine whether a data exfiltration risk exists. In various implementations, these factors can include or relate to file management information (e.g., as collected by a file management system in the network operating system), and/or user activity information (e.g., as collected by a computer-based session-monitoring agent during one or more user sessions within the computer network 102). These factors generally do not include any substantive content of the computer files that are subjected to exfiltration.

The file management system is a computer-based system that the network's operating system, for example, may use to organize and keep track of files. In a typical implementation, the file management system is responsible for creating, deleting, modifying, and controlling access to computer files in an organization's computer network (e.g., 102). Some of the file management information that the exfiltration detection and response system 118 might take into account in determining whether a data exfiltration risk exists with respect to a particular computer file in the computer network 102 includes: the origin of the file (e.g., where in computer network 102 the file was first created and/or stored), metadata of the file at its origin (e.g., file name, file size, etc.), whether the file has been copied or is a copy of another file, whether the file has been given a different name than its original one, whether the file has been stored in a location that is different from its original location, whether the file has been reformatted (e.g., from a .doc file to a .jpg file, etc.), whether the file has been or is being moved to a particular location (especially outside the network 102), whether the file has been opened by a particular user, whether a particular file has been deleted, whether a user has run a search for a particular file, and/or whether a user has modified one or more file attributes, properties, or file permissions associated with a particular file.

The session-monitoring agents are computer-based activity monitors that monitor the activities of a user during sessions on the computer network 102. In some implementations, one session-monitoring agent is deployed (e.g., by the exfiltration detection and response system 118) for each respective user session that gets initiated on the computer network 102. In those typical implementations, a new session-monitoring agent is deployed each time a new user session is initiated (e.g., each time a user logs into the computer network 102 to gain access to the network's resources, programs and/or files). More typically, a session-monitoring agent is deployed just once -- when a user logs in, and simply stops running when the user logs out. Some of the user activity information that the exfiltration detection and response system 118 might take into account in determining whether a data exfiltration risk exists with respect to a particular computer file includes: what application(s) (e.g., web browsers, etc.) a user is using at a particular time, what the user is doing with that (those) application(s), what websites (e.g., identified by uniform resource locator (URL)) a user is visiting, metadata (e.g., specific commands, such as FTP requests, being run, etc.) about the application(s) a user is using, etc.).

Notably, none of this information - e.g., file management information, or user activity information -- relates to (or includes) any substantive content of the computer files themselves. For example, none of this information relates to (or includes) any of the words, characters, or other substantive content stored in the computer files themselves. To be more specific, in a typical implementation, the exfiltration detection and response system 118 assesses data exfiltration risk (and facilitates management of data exfiltration risk) with respect to specific computer files without taking into account any substantive content from the computer files themselves. This is one of the reasons why the computing techniques disclosed herein that facilitate managing data exfiltration risk are so light - the amount of data that is taken into account is low. And, although the amount of data taken into account is low, the performance (and ability to facilitate managing data exfiltration risk) is robust and reliable.

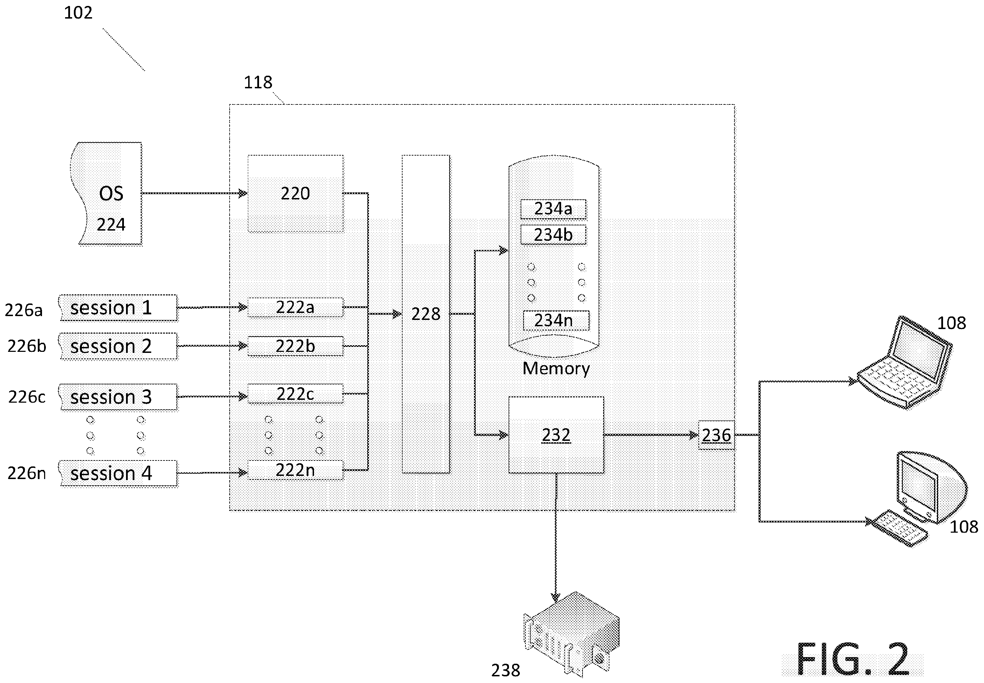

FIG. 2 is a schematic representation showing part of the computer network 102 in FIG. 1, with a particularly detailed representation of an exemplary exfiltration detection and response system 118.

The illustrated exfiltration detection and response system 118 has a file interceptor 220 and a plurality of session-monitoring agents 222a, 222b, 222c . . . 222n.

During network operations, the file interceptor 220 collects computer file management information associated with each respective one of a plurality of computer files in the computer network 102 from the computer network's operating system 224. The file interceptor 220 may receive the file management information from the computer network's operating system 224, for example, periodically in bundles, as new file management information becomes available, or in any other convenient manner. In a typical implementation, the exfiltration detection and response system 118 registers with the operating system 224 so that the file interceptor 220 will receive the file management information from the operating system 220. In a typical implementation, the operating system 220 simply provides this information to the file interceptor 220 condition-free and simply performs its functionalities without waiting for the exfiltration detection and response system 118 to check for exfiltration risk based on a particular piece of file management information provided. In some implementations, however, the file management information may be provided to the file interceptor 220 with a call-back condition, requiring an indication, for example, from the exfiltration detection and response system 118 that any actions associated with a particular piece of file management information provided (e.g., the moving of a file) does not pose a data exfiltration risk before allowing that action (e.g., the moving of the file) to happen.

Each session-monitoring agent 222a, 222b, 222c, ... 222n in the illustrated implementation is associated with, and adapted to receive user activity information from one of a plurality of a user sessions 226a, 226b, 226c, . . . 226n on the network 102, respectively. In a typical implementation, the number of session-monitoring agents 222a, 222b, 222c . . . 222n deployed on the network 102 can vary over time, and, at any given point of time, the number of session-monitoring agents 222a, 222b, 222c . . . 222n deployed on the network 102 will match the number of user sessions that are active on the network 102. For example, at one point in time, if there is only one active user session on the network 102 (e.g., only one user logged into the network 102), there will be only one session-monitoring agent deployed on the network 102 and that session-monitoring agent will receive user activity information from the one active user session. At other times, there may be many users logged into the network and, therefore, many active user sessions (one per user). At those points in time, there will be many session-monitoring agents deployed on the network 102 - one per active user session, and each session-monitoring agent will receive user activity information from one of the many active user sessions, respectively.

The illustrated exfiltration detection and response system 118 also has a history and exfiltration tracker 228 that is configured to communicate with the file interceptor 220 and each active session-monitoring agent 222a, 222b, 222c, . . . 222n. The history and exfiltration tracker 228 receives data (e.g., the file management information and user activity information collected by the file interceptor 220 and the session-monitoring agents 222a, 222b, 222c . . . 222n, respectively). In a typical implementation, the history and exfiltration tracker 228 determines, based at least in part on the data it receives, which, if any, of the computer files in the network 102 should be tracked for purposes of managing data exfiltration risk. In some implementations, this determination is made on a file-by-file basis, and may be based on one or more parameters or characteristics of each file.

As an example, the history and exfiltration tracker 228 might determine that a particular file warrants tracking for purposes of managing data exfiltration risk based on that file's original storage location in the computer network 102. So, if the particular file was created into a network storage location that a system administrator, for example, had designated for storing sensitive or confidential information, then the history and exfiltration tracker may determine that that particular file warrants tracking for purposes of managing data exfiltration risk. As another example, the history and exfiltration tracker 228 might determine that a particular file warrants tracking based on specific actions that a user may have taken in connection with that file. So, if a user has converted a particular file from a .doc format (e.g., a text file) to a .jpg format (e.g., an image file), then the history and exfiltration tracker may determine that that particular file warrants tracking for purposes of managing exfiltration risk. The underlying rationale for designating this kind of file for tracking might be that the user's behavior - in converting the file format from text to image - seems a bit suspicious, particularly if the file in question might include sensitive or confidential information. As yet another example, the history and exfiltration tracker 228 might determine that a particular file warrants tracking based on a combination of that file's original storage location (e.g., a location designated for storing somewhat, or possibly, sensitive materials) and/or potentially suspicious activities by a user relating to that file. There might be other bases (e.g., a file having been downloaded from the web or from a specific website, etc.) upon which the history and exfiltration tracker 228 might determine a particular file warrants tracking for purposes of managing exfiltration risk.

In various implementations, some or all of the bases upon which the history and exfiltration tracker 228 might determine a particular file warrants tracking for purposes of managing exfiltration risk can be preprogrammed or customized/specified by a user (e.g., a system administrator). For example, the network 102 may be configured such that a user (e.g., a system administrator) can specify, from one of user access devices 108, which parameters (e.g., sensitive storage locations, suspicious user actions, etc.) should trigger the history and exfiltration tracker 228 to designate a particular file for tracking.

For each respective one of the computer files that the history and exfiltration tracker 228 designates for tracking, the history and exfiltration tracker creates and maintains a file history chain 234a, 234b . . . 234n. Each respective one of the file history chains 234a, 234b . . . 234n typically includes at least some (or all) of the file management information and correlated user activity information associated with a particular one of the tracked computer files.

In this regard, in a typical implementation, the history and exfiltration tracker 228 correlates the user activity information to the file management information for each of the tracked computer files. According to one exemplary implementation, the history and exfiltration tracker 228 performs this correlation by comparing various types of data (e.g., time stamp information, session identifiers, user identifiers, process identifiers, metadata, etc.) associated with the file management information to the same or similar types of data (e.g., time stamp information, session identifiers, user identifiers, process identifiers, metadata etc.) associated with the user activity information.

Correlating information from these two different data sources (e.g., file management information and user activity information) gives the history and exfiltration tracker 228 deep context about each particular file being tracked within the network 102 to facilitate exfiltration risk assessment on those files.

If, for example, a user downloads his or her employer's confidential customer list through a web browser, using file transfer protocol (FTP), for example, and then attaches that customer list to an email from the user's personal email account (using the Gmail^{®} electronic mail service, for example), the history and exfiltration tracker 228 may receive user activity information indicating that the user accessed his or her personal email account and file management information indicating that a file from a confidential storage location (the confidential customer list) was being attached to an email. On their own, each piece of information in this regard may be interesting, but together they are quite interesting.

In a typical implementation, the history and exfiltration tracker 228 will correlate these two pieces of information (e.g., by saving them into a single file history chain) based on their respective time stamps indicating that the activities happened at the same time or close in time, user identifiers indicating that the same user was involved in both activities, common or similar process identifiers indicating that the same or similar processes were involved in both activities, and/or other metadata or information showing commonalities between the activities that might make one relevant to the other. Notably, in a typical implementation, correlating file management information and user activity information does not involve, or rely upon, consideration of any substantive content in the computer file at issue.

Once created, the file history chains 234a, 234b . . . 234n may be stored in any convenient storage location on the network 102, such as computer-based memory storage 230. In a typical implementation, the history and exfiltration tracker 228 stores, for each respective one of computer files identified for tracking, the computer file management information and any user activity information that has been correlated to the computer file management information in the file history chain for that computer file. Moreover, as new pieces of information relevant to a particular tracked file arrives at the history and exfiltration tracker 228 that new information can be correlated as appropriate and added to the file history chain for that computer file. Thus, at any point in time, the file history chain 234a, 234b . . . 234n for all of the tracked computer files will be generally up-to-date.

The illustrated history and exfiltration tracker 228 also has a rules engine 232. The rules engine 232 in a typical implementation is configured to apply rules (or logic) to a set of data (e.g., the file history chain for any of the tracked computer files) to determine whether a particular user activity on a particular one of the tracked computer files creates an exfiltration risk (i.e., a risk that data exfiltration has happened or may be about to happen) that warrants some kind of action (e.g., generating an alert, blocking a user action, etc.) by the history and exfiltration tracker 228.

The rules engine 232 typically performs its role by considering not only its own rules, but also the file history chain for the file at issue (including, e.g., the file's original storage location, whether there have been any suspicious user activities on that file, etc.). Notably, in a typical implementation, the rules engine performs its role without any regard to substantive content contained in the file at issue. In a typical implementation, the rules engine 232 performs its role every time a new piece of information relevant to one of the tracked files is added to the file history chain 234a, 234b . . . 234n for that file. However, in some implementations, the rules engine 232 performs this function at set time intervals (for all or some of the files), based on some other trigger, etc.

There are a number of different rules that could be used by the rules engine to determine that a particular user activity on a particular file creates an exfiltration risk that warrants some action by the exfiltration detection and response system 118. Some examples of these rules might include: 1) take an action if a file from a sensitive or confidential storage location is about to be sent (or has been sent) to an email address not associated with the organization (e.g., a personal email address), 2) take an action is a file from a sensitive or confidential storage location has had its format changed (e.g., from a text format to an image format) and is now about to be saved (or has been saved) in a non-sensitive and non-confidential storage location, 3) take an action if any file has been subjected to a certain type of suspicious user activity and is now poised to be removed (or has been removed) from the network, etc. The rules or logic in the rules engine 232 can be preprogrammed rules, user-specified rules, or a combination of both. In implementations where the rules or logic can be user-specified, a system administrator, for example, may be able program those rules or logic into the rules engine 232 from any one of the user access devices 108 in the network 102. The rules can be broad (e.g., generate an alert if any file from a particular storage location is attached to an email, shut down the user session if certain users access a file from a particular storage location, etc.) or specific (e.g., generate an alert if a particular file is attached to a personal email account of a specific user). Different rules can apply to different users, roles within the organization, files, types of files, storage locations, times of day, days of the week, etc.

There are various actions that the exfiltration detection and response system 118 can take in response to the rules engine 232 determining that a particular user activity on a particular one of the tracked computer files creates an exfiltration risk that warrants some kind of action.

For example, the exfiltration detection and response system 118 may cause an alert to be sent to a system administrator and/or other designated alert recipient(s).

The alert may be sent in any number of possible ways including, for example, via text, email, phone call, etc. In some implementations, the way that an alert is sent can be specified / personalized by the system administrator, or other intended recipient. The alert may indicate generically that a data exfiltration risk has been identified, or may include, or facilitate access to, additional information about the data exfiltration risk - e.g., what the risk is (e.g., a file from a sensitive location has been attached to an email, a file from a sensitive location has had its format changed from text to an image, etc.), which network user is involved, the time and date of the event, where the event happened (e.g., in the office, outside the office from a computer logged into the network, etc.), etc. In some implementations, the alert may present the system administrator with information that helps the system administrator take whatever next steps might be appropriate. For example, the alert may include, or facilitate access to, contact information for the user involved, a button that the system administrator can select to block the involved user from taking any further actions or from taking a specific action, an option that allows the system administrator to text or email with etc. In some implementations, the alert may include an option to share the alert with others within the organization.

As another example, the exfiltration detection and response system 118 may send a message to the user involved in the activity that created the exfiltration risk. The message, of course, may be sent in any number of possible ways including, for example, via pop-up on a user's screen, text, email, phone call, etc. In some implementations, the way that an alert is sent can be specified / personalized by the system administrator. The message may indicate generically that some activity that the user is engaged in has been flagged as creating a risk of data exfiltration, or may include, or facilitate access to, additional information about the data exfiltration risk - e.g., what the risk is (e.g., a file from a sensitive location has been attached to an email, a file from a sensitive location has had its format changed from text to an image, etc.), etc.

As another example, the exfiltration detection and response system 118 may automatically block one or more user activities after a determination that an activity by the user has created an exfiltration risk that warrants blocking. There are a variety of ways that user activities may be blocked. In one exemplary implementation, the exfiltration detection and response system 118 may cause the operating system to terminate the user's session. In another exemplary implementation, the exfiltration detection and response system 118 may cause the network 102 to block only specific actions (e.g., sending an email) on the network 102. In some implementations, the exfiltration detection and response system 118 may block the user's screen.

In some implementations, the exfiltration detection and response system 118 may take more than one actions in response to the rules engine 232 determining that a particular user activity on a particular one of the tracked computer files creates an exfiltration risk that warrants some kind of action. For example, in some implementations, the exfiltration detection and response system 118 may send a message to the user involved in the questionable activity and to the system administrator. In some implementations, the exfiltration detection and response system 118 may block a user's actions on the network 102 and send an alert to the system administrator. In some implementations, the exfiltration detection and response system 118 may block a user's actions on the network 102, send an alert to the system administrator, and send a message to the user involved in the questionable activity. Other actions and/or combinations of actions in this regard are possible as well.

In a typical implementation, the rules engine 232 may store information about its determinations regarding exfiltration risk and any actions taken as a result of those determinations. In this regard, the rules engine 232 in the illustrated implementation is coupled to (and stored this, and perhaps other information in) a server 238 that is outside the exfiltration detection and response system 118. In some implementations, the information stored in this regard includes the underlying file history chain(s) as well. The information stored in the server 238 may be used after the fact by a system administrator, for example, to analyze a particular circumstance that may have been flagged as a data exfiltration risk.

The illustrated exfiltration detection and response system 118 has an output 236 that is coupled to the user access terminals 108, and through which the exfiltration detection and response system 118 can send alerts, messages, instructions, etc. to implement associated reactions to data exfiltration risks.

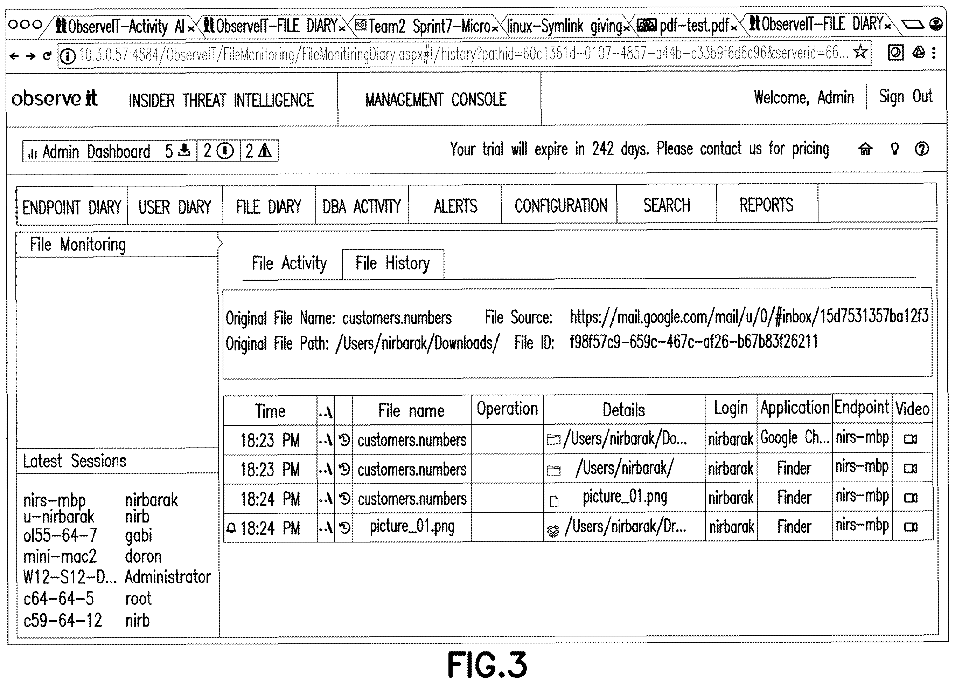

FIGS. 3 - 9 are screenshots that might appear, for example, at one or more of the user access devices 108 in a network 102 when user is logged into the network 102 through that device 108. These screenshots correspond to only one exemplary implementation of the exfiltration detection and response system 118 being implemented on a network.

The screenshot in FIG. 3 shows file history, and other data for a tracked file - a list of customer names -- in the network 102. More particularly, the illustrated screenshot identifies the original file name, the file source, the original file path, and a file identification code. Moreover, the screenshot includes a chronological listing of user actions taken with respect to the tracked file. **In** a typical implementation, the chronological listing of user actions includes information from or related to the file history chain for the file.

The chronological listing of user actions taken with respect to the tracked file specifies, for each entry, the time (and, typically, date), the file name, the operation, details, the user logged in (who performed the action), the application involved, the end point, and a link to a video of the associated user session when the action happened. The video may be captured, for example, by the session-monitoring agent operating when each action happened. According to the chronological listing in the illustrated screenshot, user, nirbarak, downloaded the customers.numbers file, converted that file into an image (.png) file, and then moved the image file into a dropbox. The last entry in the chronological listing has a bell symbol to the left of the listing that indicates that an alert became associated with that file upon that entry. Presumably, the rules engine determines that, under the indicated circumstances (e.g., sensitive information, being converted from a text file into an image file, and then being moved to a dropbox) warranted an alert.

In a typical implementation, one can reach the screen of FIG. 3 from either an alert itself or from one of the file activities in a file history chain, that can appear, for example, in another system diary. In some implementations, information about the operation performed is provided under the column heading "operation."

In a typical implementation, a user viewing the screenshot in FIG. 3 can click on any one of the entries to access more information about the associated user action.

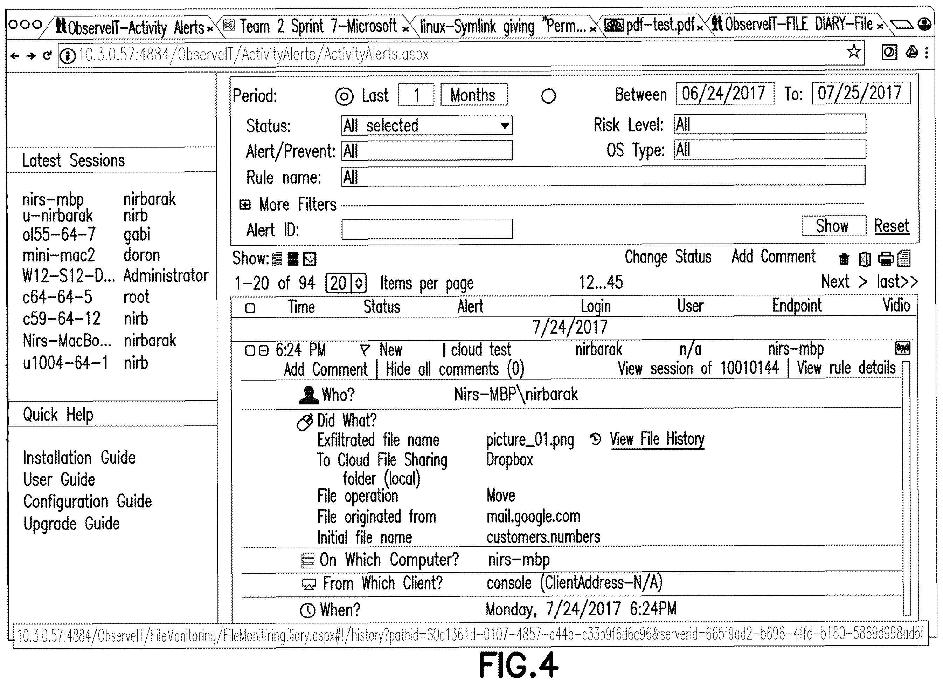

The system also typically allows a user (e.g., a system administrator or the like) to search for various types of user actions that may have occurred with respect to tracked files. FIG. 4 shows one example of a search screen that allows the user to search based on time period, status (e.g., new, old, etc.), risk level (e.g., high, medium, low, etc.), whether an alert was generated or an action was prevented, the type of operating system, the applicable rule name that may have been implicated, an identification code for the associated alert, and/or other filters.

The bottom portion of the FIG. 4 screenshot shows the first result of a search conducted based on the parameters specified in the top portion of the FIG. 4 screenshot. This result just so happens to correspond to the last entry in the chronological listing of user action involving the customers.numbers file in FIG. 3. The information about this user action provided in the bottom portion of the screenshot in FIG. 4 specifies who performed the action, what the action was (e.g., the exfiltrated file, the destination of the exfiltrated file, the file operation performed to exfiltrate, where the file originated from, and the initial file name), on which computer the action happened, from which client, and when.

The bottom portion of the FIG. 4 screenshot also has a link to "View File History," which, if selected, would return the user to the screenshot of FIG. 3.

Referring again to FIG. 3, as mentioned above, each entry in the chronological listing of user actions relating to the customers.numbers file includes a camera symbol that is a link to a video showing the user action that corresponds to the associated entry. In a typical implementation, clicking on that camera symbol causes the system to present to the user the associated video. To be clear, the video shows what was happening on the screen of the user that performed the action at issue when that action was performed (and may include actions leading up to and/or following the action at issues).

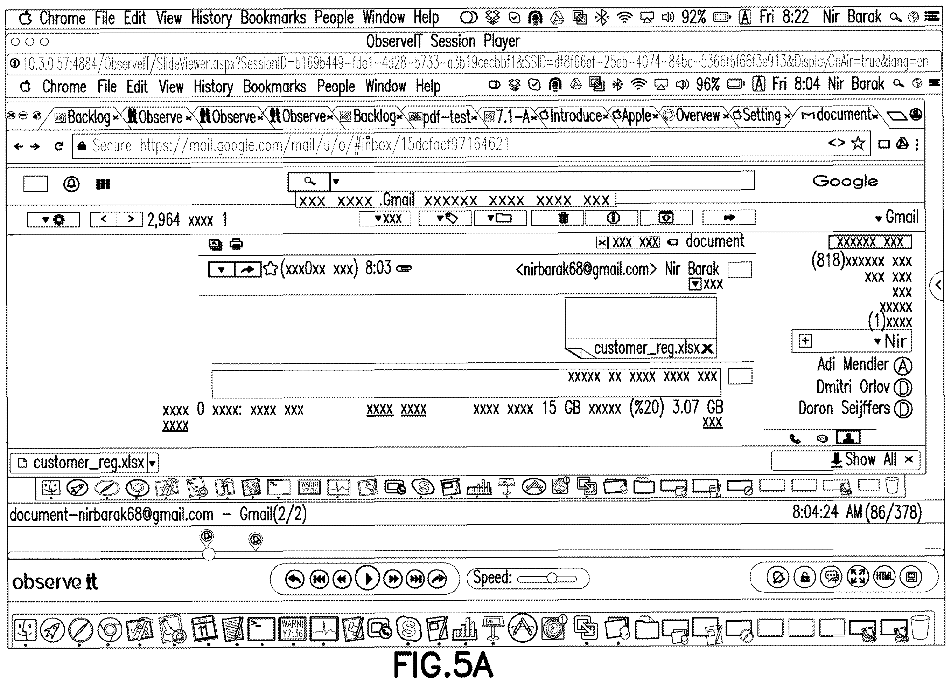

FIGS. 5A-5E are screenshots showing stills from a video that might be presented to a user if that user clicked on the camera icon for the last entry in the chronological listing in FIG. 3. The video is being played in a video player.

**In** FIG. 5A the video player shows the user action of downloading the file.

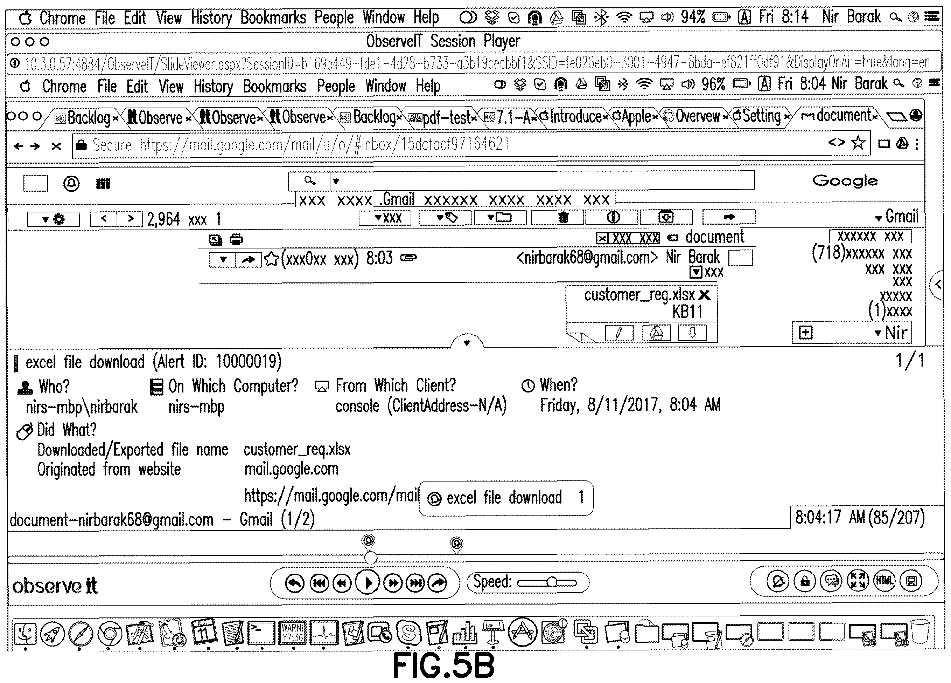

In FIG. 5B the video player shows an alert on entry point. The alert in the illustrated example indicates who performed the action that caused the alert, on which computer, from which client, and when. The alert also identifies what was done, including specifying the file name and the originated from website.

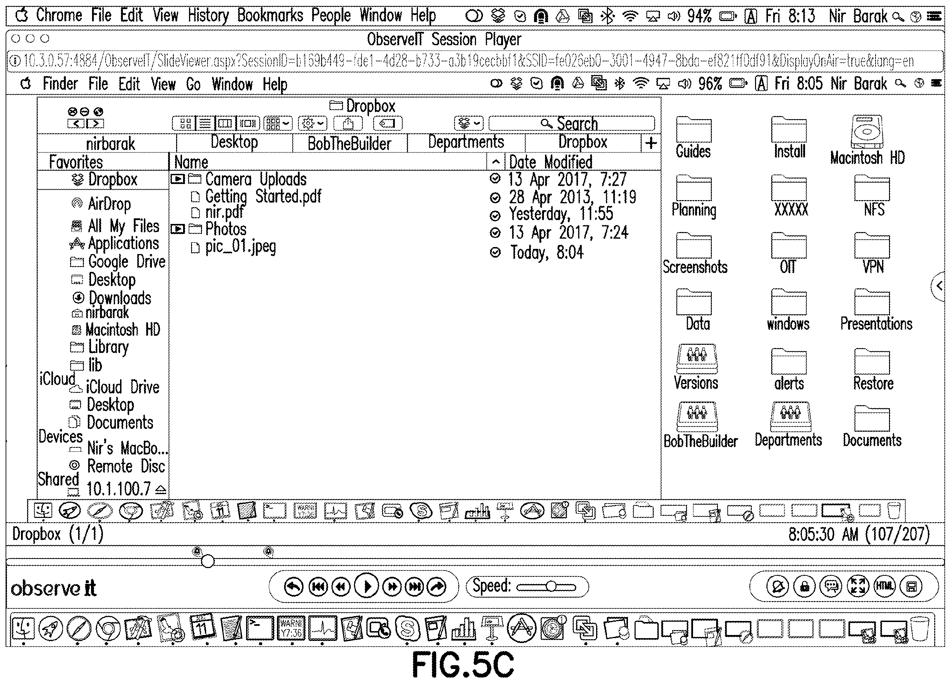

In FIG. 5C the video player shows the file appearing with the exfiltration point (in this example Dropbox).

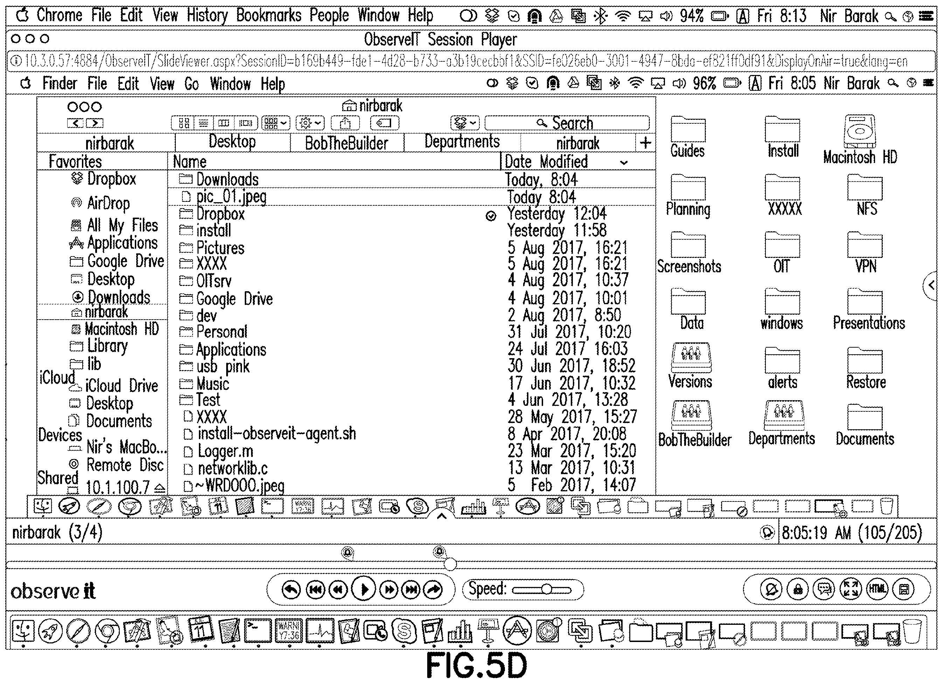

In FIG. 5D the video player shows the file being moved into Dropbox.

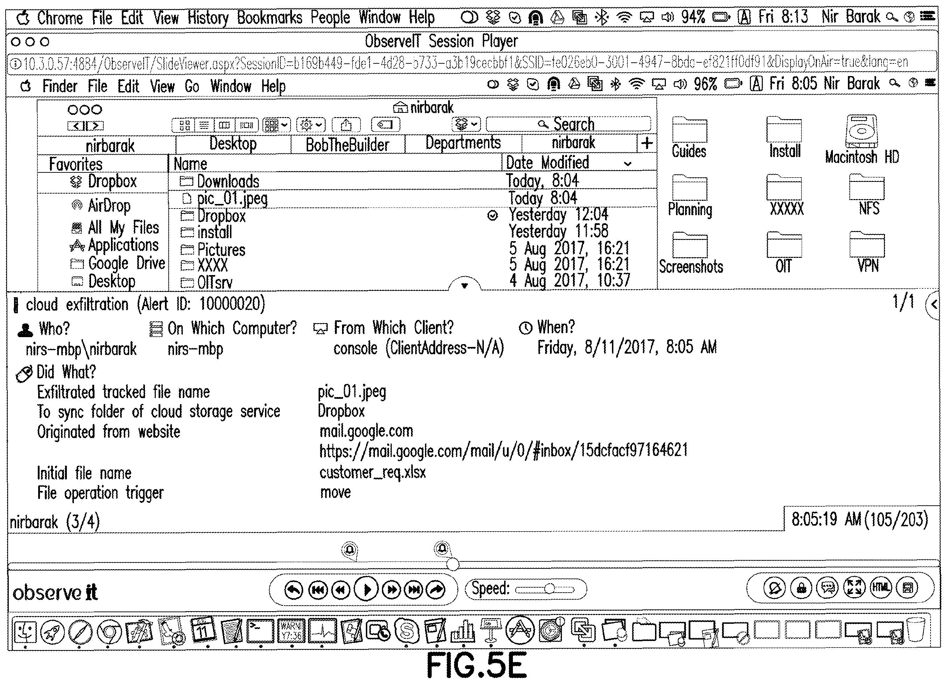

IN FIG. 5E the video player shows another alert. This alert indicates who performed the action that caused the alert, on which computer, from which client, and when. The alert also identifies what was done, including specifying the exfiltrated tracked file name, where the file was synched to, the originated from website, the initial file name, and the file operation trigger (e.g., move).

In a typical implementation, the information contained in a video clip such as the one represented in FIGS. 5A-5E provide system administrators, or the like, with a great deal of useful information about exfiltration events.

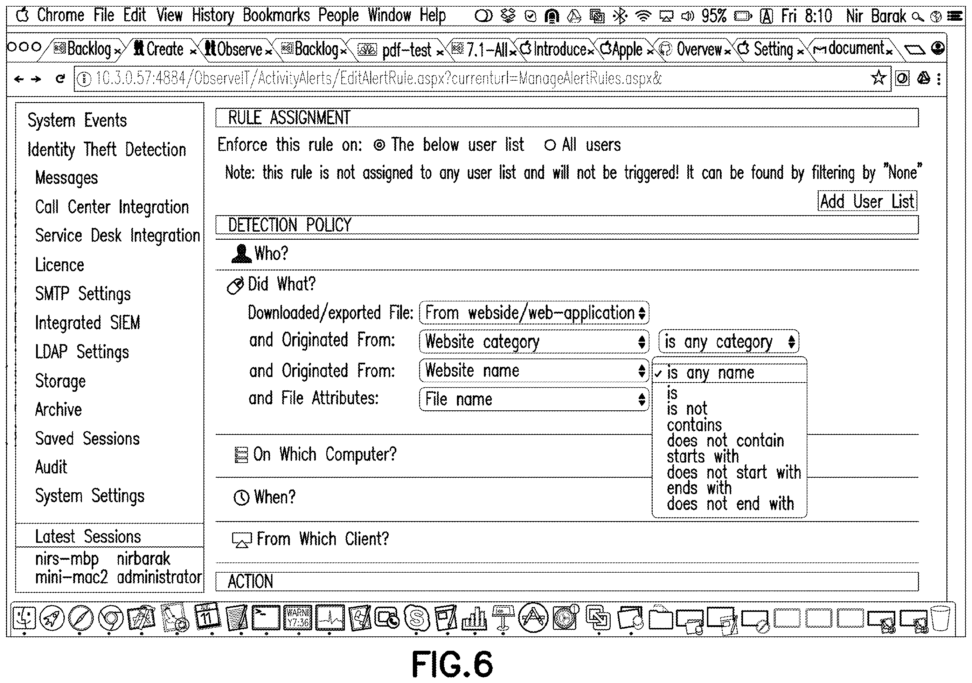

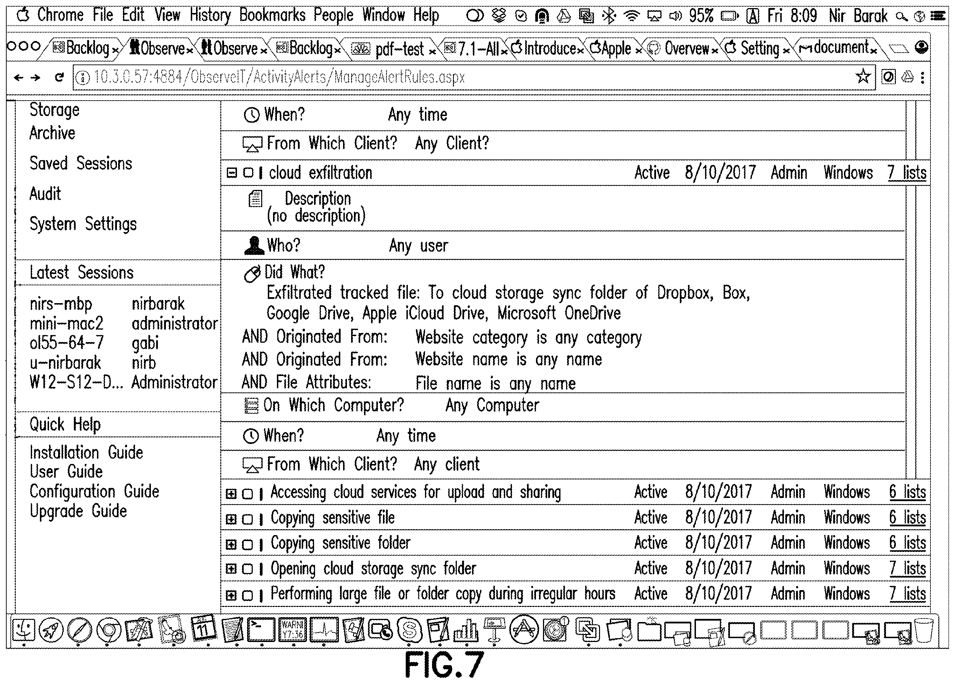

FIGS. 6 and 7 show a screenshot that includes functionality that enables a user to specify rules (e.g., detection policies) for the rules engine to apply in determining whether an exfiltration risk exists or not.

The upper portion of FIG. 6 shows is a portion of the screenshot that enables the user to specify who this rule should apply to (or be enforced on). The two choices provided are: all users or a list of specific user. The lower portion of FIG. 6 the screenshot includes functionality that allows the user to specify the contours of the particular rule (policy). In particular, the lower portion of the screenshot includes functionality that allows the user to set rules to produce an action based on who did what, on which computer, when, and from which client. The "did what" portion is further broken down, in the illustrated implementation, to enable specifying downloading or exporting files from particular locations, that were originated from particular categories of websites and/or named websites, and/or having particular file attributes. This screen also provides the user with functionality to specify the action to perform if the rules / policies so warrant an action.

The portion of the screenshot in FIG. 7 includes functionality that enables a user to define exfiltration points in the network. In a typical implementation, the user can define the exfiltration points based on the methods to take files out of the system (to be alerted on), for example - copy to dropbox, or to a Google drive, as well as entry points to track (e.g., from a specific website or category). In some implementations, the user may be able to limit tracking by file name or file type (the default may be to track all files from all sites).

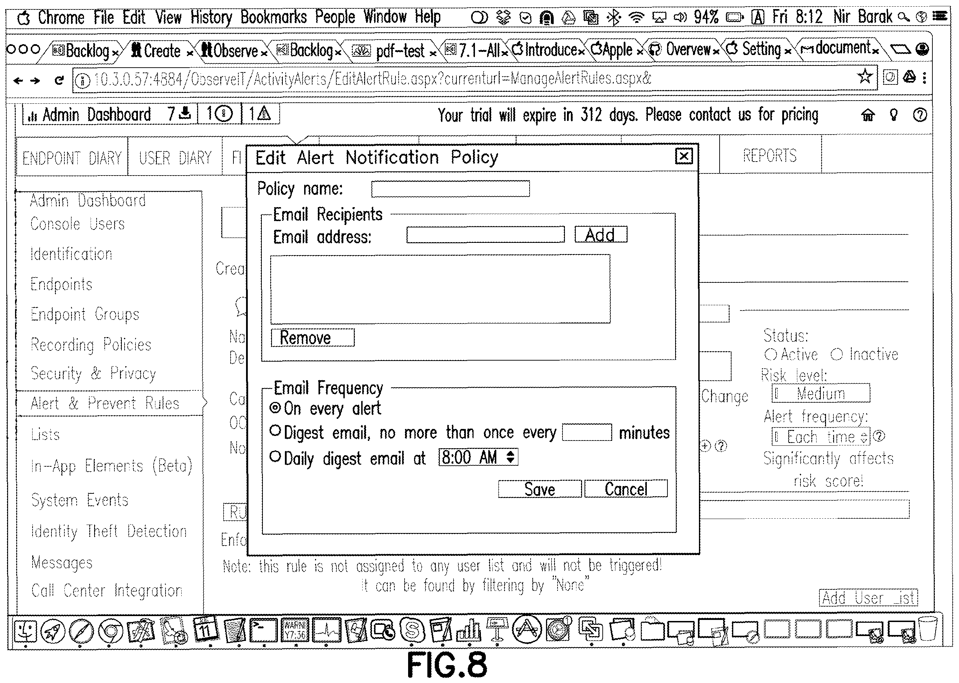

FIG. 8 has a pop-up that enables a user to edit an alert notification policy. The pop-up includes a field that the user can populate to identify the policy name that the user wants to edit. The pop-up includes another field that the user can populate with email addresses of users that should receive alerts (via email). The pop-up also includes buttons that enable the user to specify email frequency.

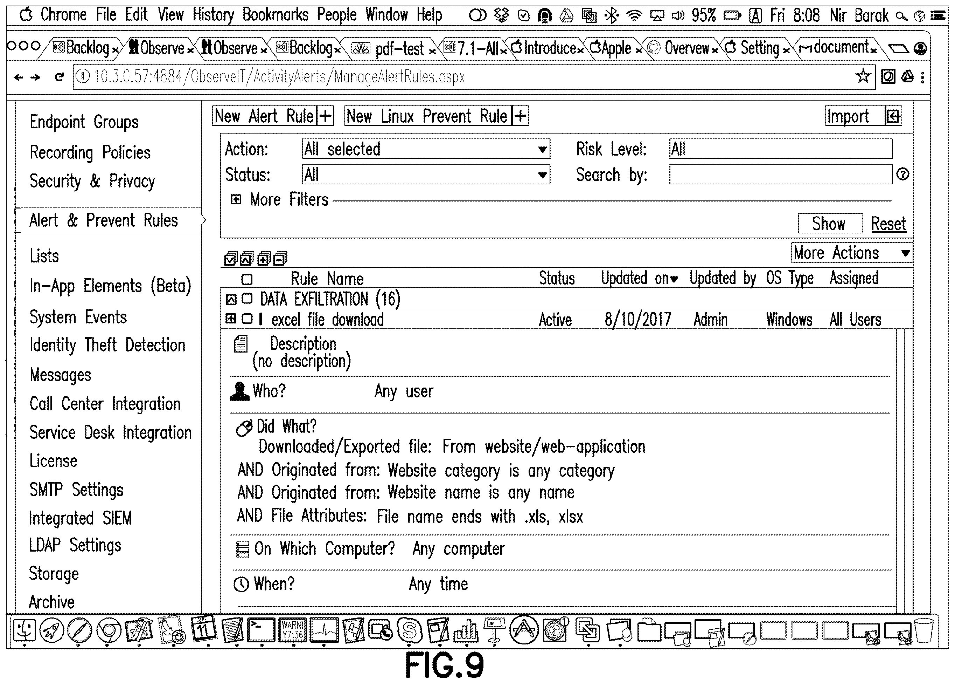

FIG. 9 is a screenshot that includes functionality that enables a user to specify when the system should alert and when the system should stop or block user activity. The screenshot in this regard enables the user to add new alert rules, or add new Linux prevent rules. The screenshot also includes a search functionality that enables the user to search for alert / prevent rules based on action, risk level, status, and/or, optionally, more filters. The bottom portion of the screenshot shows one rule name and its associated parameters.

A number of embodiments of the invention have been described. Nevertheless, it will be understood that various modifications may be made without departing from the spirit and scope of the invention.

For example, the techniques and technologies disclosed herein can be deployed in virtually any kind of computer network. The computer network can have a firewall and/or other security measures or not. The organization that runs, controls, or owns the network can be virtually any type of entity comprising multiple people, such as a business, an institution, or an association, that has one or more collective goals and is linked to an external environment. There are a variety of types of organizations, including, for example, corporations, governments, governmental entities, non-governmental organizations, political organizations, armed forces, charities, not-for-profit corporations, partnerships, cooperatives, educational institutions, religious organizations (e.g., churches), hybrid organizations (e.g., that operate in the public sector and private sector simultaneously), voluntary associations (including informal clubs), secret societies, etc.

In some implementations, the organization's computer network environment is defined by a computer-based firewall. The firewall can be virtually any kind of firewall. In computing, a firewall is a network security system that monitors and/or controls incoming and outgoing network traffic based on predetermined security rules. A firewall typically establishes a barrier between a trusted, secure internal network and another outside network, such as the Internet, that is assumed not to be secure or trusted. In some implementations, access to the organization's computer-based resources within the firewall may require a log in or satisfying some access criteria.

The network architecture, and/or the architecture of the exfiltration detection and response system can vary. For example, the functions and sub-components of the different exfiltration detection and response system can be combined, consolidated, or separated into a different configuration of sub-components. The sub-components can be local to one another (e.g., implemented in a single network component) or distributed across the network. Likewise, the functionalities associated with the exfiltration detection and response system and/or its sub-components can be performed by other components or sub-components.

The exfiltration detection and response system may be deployed in a variety of different ways within the computer network. For example, some portions of the exfiltration detection and response system may be incorporated into the specific computers (e.g., user access devices) on the computer network, whereas other portions of the exfiltration detection and response system may be incorporated on the server side of the computer network 102 (e.g., in one or more servers). More particularly, in one exemplary implementation, the rules for the rules engine and alert portions of the exfiltration detection system may be implemented on the server side of the computer network 102 (and serve, for example, the entire network), whereas the other portions of the exfiltration detection and response system (e.g., the history and exfiltration tracker, file interceptor and/or session monitoring agent) may be implemented in each respective one of the network computer devices. **In** those sorts of implementations, any portions of the exfiltration detection and response system incorporated into a particular network computer device typically would be dedicated to serving that particular network computer device.

The specific types of file management information and/or user activity information that the exfiltration detection and response system receives can vary. The filtering of any received information can vary. There are a variety of ways that this information might be collected. For example, in some implementations, the file management information may be collected based on the kernel action of the network's operating system. The user activity information may also come from the operating system, but typically is not based on the kernel action.

In this regard, for example, each session-monitoring agent may connect to a user session, and listen for specific user actions (e.g., which application is active, what it is doing, what website is being accessed, what browser is being used, meta data about the application (e.g., specific commands being run, FTP requests being made, etc.). The session-monitoring agents may be operable to always be running (and recording) inside a session (silently or not silently) and recording everything, or maybe set to operate based on a policy - e.g., set to operate on trigger. The session-monitoring agents may be configured to capture a video of the user's session (e.g., showing the user's screen during the entire session or during some relevant portion of the session), and/or collect data about the session in any one or more of a variety of ways.

For each session, the session monitoring agent typically gets a session ID from the operating system. If the user logs out and logs back in, the operating system and the exfiltration detection and response system treat that as a new session. Generally, session information does not include things like "open a file" or "move a file," but the system may learn about those things indirectly from session information (e.g., the session-level information may reveal that a user opened application known as WORD, and inside the header of document in WORD there is a name, so the system can assume that this is the name of the file that was being opened). In this sort of situation, the system may correlate the session level information with the file management information to be sure of the session level information's relevance.

The correlating functionalities can be performed in any one of several possible ways and can take into account various types of file management information (e.g., process IDs, user IDs, session IDs, file names, operations, time stamps, etc.), and session level information (e.g., session IDs, user IDs, process IDs, window IDs, information in the windows, time stamps, etc.).

The file history chains can be saved in one location or multiple locations and can be saved locally, remotely and/or in a distributed fashion. The rules engine can include and be configured to apply a wide variety of possible rules.

The exfiltration detection and response system can be implemented in a number of possible ways. Typically, the exfiltration detection and response system is implemented in software (e.g., saved in memory on the network, or in some non-transitory computer-based memory storage medium) that causes network processors, etc. to perform and/or facilitate the various functionalities disclosed herein as being attributable to the exfiltration detection and response system.

The design of the screenshots can vary considerably from the exemplary screenshots disclosed herein. There are various entry points that the system may use to start tracking a file (e.g., a sensitive origin, some suspicious activity, etc.), and there are various exit points that the system may consider as possible indicators that a file, or its contents might be exfiltrated from the network (e.g., Gmail, USB, cloud folder, etc.). Indeed, different entry point, exfiltration points or actions can be important to or be part of the system, like zipping or archiving a file or getting the file into the system in a different way like creating it using some application.

The alerts and/or responses can take on any number of various forms. Different levels of user action blocking are possible. For example, a user's action may be blocked and accompanied by a message to the user (e.g., "you tried to do something that is not allowed" and giving reason why the action is not allowed).

The exfiltration detection and response system 118, and other components mentioned herein, interact with and receive information, directly or indirectly, from a network's operating system. The operating system can be virtually any kind of operating system including, for example, a mobile device operating system, or any other kind of operating system. In general, an *operating system* is a program that, after being initially loaded into a computer or network, manages other programs in the computers of the network.

In some implementations, certain functionalities described herein may be provided by a downloadable software application (i.e., an app). The app may, for example, implement or facilitate one or more (or all) of the functionalities described herein as taking place at or in association with a website.

In various embodiments, the subject matter disclosed herein can be implemented in digital electronic circuitry, or in computer-based software, firmware, or hardware, including the structures disclosed in this specification and/or their structural equivalents, and/or in combinations thereof. In some embodiments, the subject matter disclosed herein can be implemented in one or more computer programs, that is, one or more modules of computer program instructions, encoded on computer storage medium for execution by, or to control the operation of, one or more data processing apparatuses (e.g., processors). Alternatively, or additionally, the program instructions can be encoded on an artificially generated propagated signal, for example, a machine-generated electrical, optical, or electromagnetic signal that is generated to encode information for transmission to suitable receiver apparatus for execution by a data processing apparatus. A computer storage medium can be, or can be included within, a computer-readable storage device, a computer-readable storage substrate, a random or serial access memory array or device, or a combination thereof. While a computer storage medium should not be considered to include a propagated signal, a computer storage medium may be a source or destination of computer program instructions encoded in an artificially generated propagated signal. The computer storage medium can also be, or be included in, one or more separate physical components or media, for example, multiple CDs, computer disks, and/or other storage devices.

The operations described in this specification can be implemented as operations performed by a data processing apparatus (e.g., a processor) on data stored on one or more computer-readable storage devices or received from other sources. The term "processor" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, for example, code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings and described herein as occurring in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

At least some of the functionalities associated with the system disclosed herein can be accessed from virtually any kind of electronic computer device, including, for example, cell phones and tablet.

Other implementations are within the scope of the claims.

## Claims

1. A computer-based method to facilitate managing data exfiltration risk in a computer network environment (100), the computer-based method comprising:
collecting computer file management information associated with each respective one of a plurality of computer files in an organization's computer network environment from a computer operating system (224);
collecting user activity information associated with each respective one of plurality of user sessions (226) by users having access to the organization's computer network environment, using a plurality of session monitoring agents (222);
correlating at least some of the collected user activity information to one or more of the computer files associated with the collected file management information;
identifying which of the computer files in the organization's computer network environment should be tracked for purposes of assessing the data exfiltration risk with respect to the computer files identified for tracking;
creating a file history chain (234) for each respective one of the computer files identified for tracking,
wherein the file history chain for each respective one of the computer files identified for tracking includes the collected file management information and any of the correlated user activity information associated with the respective computer file; and
assessing the data exfiltration risk with respect to the computer files identified for tracking based at least in part on some of the file management information and the correlated user activity information in the file history chain.

2. The computer-based method of claim 1, further comprising:
presenting an alert to one or more particular system users if the assessment reveals that the data exfiltration risk exists with respect to one or more of the computer files

3. The computer-based method of claim 1, further comprising:
preventing a user action that would result in a data exfiltration associated with one of the computer files if the assessment reveals that the data exfiltration risk exists with respect to the respective computer file.

4. The computer-based method of claim 1, wherein the exfiltration risk is assessed without taking into account any content of the one or more computer files.

5. The computer-based method of claim 1, wherein identifying which of the computer files should be tracked for possible data exfiltration takes into account for each computer file its original storage location in the organization's computer network environment, and/or whether any suspicious actions may have been performed by a user on the respective computer file.

6. The computer-based method of claim 1, wherein assessing the data exfiltration risk comprises: using a rules engine to check whether one or more particular actions in a tracked file history chain or characteristics associated with a particular one of the computer files being tracked creates the data exfiltration risk.

7. The computer-based method of claim 1, wherein correlating at least some of the collected user activity information to one or more of the computer files associated with the collected file management information comprises:
comparing timestamp information, session identifiers, user identifiers, and/or process identifiers associated with the collected computer file management information to timestamp information, session identifiers, user identifiers, and/or process identifiers associated with the collected user activity information.

8. The computer-based method of claim 1, wherein the computer file management information comprises information about one or more of the following operations: creating a file, opening a file, renaming a file, moving a file, copying a file, deleting a file, searching for a file, encrypting a file, putting a file into an archive, and/or modifying one or more file attributes, properties, or file permissions.

9. The computer-based method of claim 1, wherein each respective one of the user sessions corresponds to a period of time between a particular system user logging into and subsequently logging out of the organization's computer network environment.

10. The computer-based method of claim 1, wherein the organization's computer network environment has a firewall (104) that restricts communications between the computer network environment and other computer resources and devices outside the computer network environment.

11. The computer-based method of claim 1, further comprising:
filtering the computer file management information to remove any information related to or including temporary files prior to the correlating.

12. A computer system comprising:
a plurality of computer-based user access devices (108) and resources within a computer network (102) that has a firewall (104);
an operating system (224) to support computer operations within the computer network;
an exfiltration detection and response system (118) configured to interact with the operating system, and to facilitate managing data exfiltration risk in the computer network, wherein the exfiltration detection and response system comprises:
a file interceptor (220) to receive computer file management information associated with each respective one of a plurality of computer files in the computer network from the operating system;
one or more session-monitoring agents (222) to collect user activity information associated with each respective one of a plurality of user sessions (226) on the computer network by users having access to the computer network; a history and exfiltration tracker (228) to correlate at least some of the collected user activity information to one or more of the computer files associated with the file management information received from the operating system,
wherein the history and exfiltration tracker identifies which of the computer files should be tracked for purposes of assessing the data exfiltration risk based on, for each computer file, its original storage location in the computer network, and/or whether any suspicious actions have been performed by a user on the respective computer file, and,
wherein the history and exfiltration tracker stores, for each respective one of the computer files identified for tracking, the computer file management information and any user activity information that has been correlated to the computer file management information in a file history chain (234) for the respective computer file; and
a rules engine (232) to assess the data exfiltration risk with respect to the computer files identified for tracking based at least in part on some of the file management information and the correlated user activity information in the file history chain.

13. The computer system of claim 12, wherein the exfiltration detection and response system is configured to present an alert to one or more particular users of the system who are logged into the computer network from any of the computer-based user access devices, in response to the rules engine determining that an exfiltration risk exists with respect to a particular one of the computer files.

14. The computer system of claim 12, wherein the exfiltration detection and response system is configured to prevent a user action that would result in a data exfiltration, in response to the rules engine determining that an exfiltration risk exists with respect to a particular one of the computer files.

15. The computer system of claim 12, wherein the exfiltration detection and response system assesses the data exfiltration risk without taking into account any substantive content of the one or more computer files.

16. The computer system of claim 12, wherein the rules engine assesses the data exfiltration risk for a particular one of the computer files being tracked by checking whether one or more particular actions or characteristics associated with that computer file create the data exfiltration risk.

17. The computer system of claim 12, wherein the history and exfiltration tracker correlates at least some of the collected user activity information to the one or more of the computer files associated with the collected file management information by:
comparing timestamp information, session identifiers, user identifiers, and/or process identifiers associated with the received computer file management information to timestamp information, session identifiers, user identifiers, and/or process identifiers associated with the collected user activity information.

18. The computer system of claim 12, wherein the computer file management information comprises information about one or more of the following operations: creating a file, opening a file, renaming a file, moving a file, copying a file, deleting a file, searching for a file, encrypting a file, putting a file into an archive, and/or modifying one or more file attributes, properties, or file permissions, and
wherein each respective one of the user sessions corresponds to a period of time between a particular system user logging into and logging out of the computer network.

19. The computer system of claim 12, wherein the one or more session-monitoring agents comprise one session-monitoring agent for each respective one of the user sessions in the computer network.

20. The computer system of claim 12, wherein the file interceptor is configured to filter the file management information so as to remove any information related to or including temporary files before the history and exfiltration tracker correlates the file management information.

## Patentansprüche

1. Computerbasiertes Verfahren zum Erleichtern des Verwaltens von Datenexfiltrationsrisiken in einer Computernetzwerkumgebung (100), wobei das computerbasierte Verfahren Folgendes umfasst:
Sammeln von Computerdateiverwaltungsinformationen, die jeder entsprechenden aus einer Vielzahl von Computerdateien in der Computernetzwerkumgebung einer Organisation zugeordnet sind, von einem Computerbetriebssystem (224);
Sammeln von Benutzeraktivitätsinformationen, die jeder entsprechenden aus einer Vielzahl von Benutzersitzungen (226) von Benutzern, die Zugang zu der Computernetzwerkumgebung der Organisation haben, zugeordnet sind, unter Verwendung von einer Vielzahl von Sitzungsüberwachungsagenten (222);
Korrelieren von zumindest einigen aus den gesammelten Benutzeraktivitätsinformationen mit einer oder mehreren aus den Computerdateien, die den gesammelten Dateiverwaltungsinformationen zugeordnet sind;
Identifizieren, welche aus den Computerdateien in der Computernetzwerkumgebung der Organisation verfolgt werden sollen, zum Bewerten des Datenexfiltrationsrisikos in Bezug auf die zum Verfolgen identifizierten Computerdateien;
Erzeugen einer Dateihistorienkette (234) für jede entsprechende aus den Computerdateien, die zum Verfolgen identifiziert werden,
wobei die Dateihistorienkette für jede entsprechende aus den Computerdateien, die zum Verfolgen identifiziert wurden, die gesammelten Dateiverwaltungsinformationen und etwaige korrelierte Benutzeraktivitätsinformationen, die der entsprechenden Computerdatei zugeordnet sind, umfasst; und
Bewerten des Datenexfiltrationsrisikos in Bezug auf die zum Verfolgen identifizierten Computerdateien zumindest teilweise basierend auf einigen aus den Dateiverwaltungsinformationen und den korrelierten Benutzeraktivitätsinformationen in der Dateihistorienkette.

2. Computerbasiertes Verfahren nach Anspruch 1, ferner umfassend:
Ausgeben einer Warnung für einen oder mehrere bestimmte Systembenutzer, wenn die Bewertung ergibt, dass ein Datenexfiltrationsrisiko in Bezug auf eine oder mehrere aus den Computerdateien besteht.

3. Computerbasiertes Verfahren nach Anspruch 1, ferner umfassend:
Verhindern einer Benutzerhandlung, die zu einer einer aus den Computerdateien zugeordneten Datenexfiltration führen würde, wenn die Bewertung ergibt, dass ein Datenexfiltrationsrisiko in Bezug auf die entsprechende Computerdatei besteht.

4. Computerbasiertes Verfahren nach Anspruch 1, wobei das Exfiltrationsrisiko ohne Berücksichtigung des Inhalts der einen oder mehreren Computerdateien bewertet wird.

5. Computerbasiertes Verfahren nach Anspruch 1, wobei das Identifizieren, welche der Computerdateien in Bezug auf eine mögliche Datenexfiltration verfolgt werden soll, für jede Computerdatei ihren ursprünglichen Speicherort in der Netzwerkumgebung der Organisation und/oder berücksichtigt, ob verdächtige Handlungen durch einen Benutzer an der entsprechenden Computerdatei durchgeführt worden sein könnten.

6. Computerbasiertes Verfahren nach Anspruch 1, wobei das Bewerten des Datenexfiltrationsrisikos Folgendes umfasst:
Verwenden einer Regel-Engine zum Überprüfen, ob eine oder mehrere bestimmte Handlungen in einer verfolgten Dateihistorienkette oder Eigenschaften, die einer bestimmten aus den verfolgten Computerdateien zugeordnet sind, das Datenexfiltrationsrisiko verursachen.

7. Computerbasiertes Verfahren nach Anspruch 1, wobei das Korrelieren von zumindest einem Teil der gesammelten Benutzeraktivitätsinformationen mit einer oder mehreren aus den Computerdateien, die den gesammelten Dateiverwaltungsinformationen zugeordnet sind, Folgendes umfasst:
Vergleichen von Zeitstempelinformationen, Sitzungsidentifikatoren, Benutzeridentifikatoren und/oder Prozessidentifikatoren, die den gesammelten Computerdateiverwaltungsinformationen zugeordnet sind, mit Zeitstempelinformationen, Sitzungsidentifikatoren, Benutzeridentifikatoren und/oder Prozessidentifikatoren, die den gesammelten Benutzeraktivitätsinformationen zugeordnet sind.

8. Computerbasiertes Verfahren nach Anspruch 1, wobei die Computerdateiverwaltungsinformationen Informationen über einen oder mehrere aus folgenden Arbeitsvorgängen umfassen:
Erstellen einer Datei, Öffnen einer Datei, Umbenennen einer Datei, Verschieben einer Datei, Kopieren einer Datei, Löschen einer Datei, Suchen nach einer Datei, Verschlüsseln einer Datei, Archivieren einer Datei und/oder Modifzieren von einer/einem oder mehreren Dateiattributen, Eigenschaften oder Dateiberechtigungen.

9. Computerbasiertes Verfahren nach Anspruch 1, wobei jede entsprechende aus den Benutzersitzungen einem Zeitraum zwischen dem Einloggen und darauffolgenden Ausloggen eines bestimmten Systembenutzers in die/aus der Computernetzwerkumgebung der Organisation entspricht.

10. Computerbasiertes Verfahren nach Anspruch 1, wobei die Computernetzwerkumgebung der Organisation eine Firewall (104) aufweist, welche die Kommunikation zwischen der Computernetzwerkumgebung und anderen Computerressourcen und Vorrichtungen außerhalb der Computernetzwerkumgebung einschränkt.

11. Computerbasiertes Verfahren nach Anspruch 1, ferner umfassend:
vor dem Korrelieren Filtern der Computerdateiverwaltungsinformationen, um etwaige Informationen, die temporäre Dateien betreffen oder umfassen, zu entfernen.

12. Computersystem, umfassend:
eine Vielzahl von computerbasierten Benutzerzugriffsvorrichtungen (108) und Ressourcen innerhalb eines Computernetzwerks (102), das eine Firewall (104) aufweist,
ein Betriebssystem (224) zur Unterstützung von Computerarbeitsvorgängen innerhalb des Computernetzwerks;
ein Exfiltrationsdetektions- und Reaktionssystem (118), das konfiguriert ist, um mit dem Betriebssystem zu interagieren und das Verwalten eines Datenexfiltrationsrisikos im Computernetzwerks zu erleichtern, wobei das Exfiltrationsdetektions- und Reaktionssystem Folgendes umfasst:
eine Dateiabfangeinheit (220) zum Empfangen von Computerdateiverwaltungsinformationen, die jeder entsprechenden aus einer Vielzahl von Computerdateien im Computernetzwerk zugeordnet sind, von dem Betriebssystem;
einen oder mehrere Sitzungsüberwachungsagenten (222) zum Sammeln von Benutzeraktivitätsinformationen, die jeder entsprechenden aus einer Vielzahl von Benutzersitzungen (226) in dem Computernetzwerk durch Benutzer, die Zugang zu dem Computernetzwerk haben, zugeordnet sind;
eine Historien- und Exfiltrationsverfolgungseinheit (228) zum Korrelieren von zumindest einigen aus den gesammelten Benutzeraktivitätsinformationen mit einer oder mehreren aus den Computerdateien, die den von dem Betriebssystem empfangenen Dateiverwaltungsinformationen zugeordnet sind;
wobei die Historien- und Exfiltrationsverfolgungseinheit für jede Computerdatei basierend auf dem ursprünglichen Speicherort in dem Computernetzwerk und/oder darauf, ob verdächtige Handlungen durch einen Benutzer an der entsprechenden Computerdatei durchgeführt wurden, identifiziert, welche aus den Computerdateien zum Bewerten des Datenexfiltrationsrisiko verfolgt werden sollen, und
wobei die Historien- und Exfiltrationsverfolgungseinheit für jede entsprechende aus den zum Verfolgen identifizierten Computerdateien die Computerdateiverwaltungsinformationen und etwaige Benutzeraktivitätsinformationen, die mit den Computerdateiverwaltungsinformationen korreliert wurden, in einer Dateihistorienkette (234) für die entsprechende Computerdatei speichert; und eine Regel-Engine (232) zum Bewerten des Datenexfiltrationsrisikos in Bezug auf die zum Verfolgen identifizierten Computerdateien zumindest teilweise basierend auf einigen aus den Dateiverwaltungsinformationen und den korrelierten Benutzeraktivitätsinformationen in der Dateihistorienkette.

13. Computersystem nach Anspruch 12, wobei das Exfiltrationsdetektions- und Reaktionssystem konfiguriert ist, um als Reaktion auf das Bestimmen, dass ein Datenexfiltrationsrisiko in Bezug auf eine bestimmte aus den Computerdateien besteht, durch die Regel-Engine für einen oder mehrere bestimmte Benutzer des Systems, die von einer der computerbasierten Benutzerzugangsvorrichtungen aus in das Computernetzwerk eingeloggt sind, eine Warnung auszugeben.

14. Computersystem nach Anspruch 12, wobei das Exfiltrationsdetektions- und Reaktionssystem konfiguriert ist, um als Reaktion auf das Bestimmen, dass ein Datenexfiltrationsrisiko in Bezug auf eine bestimmte aus den Computerdateien besteht, durch die Regel-Engine eine Benutzerhandlung, die zu einer Datenexfiltration führen würde, zu verhindern.

15. Computersystem nach Anspruch 12, wobei das Exfiltrationsdetektions- und Reaktionssystem das Exfiltrationsrisiko ohne Berücksichtigung von substantiellen Inhalten der einen oder mehreren Computerdateien bewertet.

16. Computersystem nach Anspruch 12, wobei die Regel-Engine das Datenexfiltrationsrisiko für eine bestimmte aus den verfolgten Computerdateien bewertet, indem sie überprüft, ob eine oder mehrere bestimmte Eigenschaften, die dieser Computerdatei zugeordnet sind, das Datenexfiltrationsrisiko verursachen.

17. Computersystem nach Anspruch 12, wobei die Historien- und Exfiltrationsverfolgungseinheit zumindest einige aus den gesammelten Benutzeraktivitätsinformationen mit der einen oder mehreren aus den Computerdateien, die den gesammelten Dateiverwaltungsinformationen zugeordnet sind, durch Folgendes korreliert:
Vergleichen von Zeitstempelinformationen, Sitzungsidentifikatoren, Benutzeridentifikatoren und/oder Prozessidentifikatoren, die den empfangenen Computerdateiverwaltungsinformationen zugeordnet sind, mit Zeitstempelinformationen, Sitzungsidentifikatoren, Benutzeridentifikatoren und/oder Prozessidentifikatoren, die den gesammelten Benutzeraktivitätsinformationen zugeordnet sind.

18. Computersystem nach Anspruch 12, wobei die Computerdateiverwaltungsinformationen Informationen über einen oder mehrere aus folgenden Arbeitsvorgängen umfassen:
Erstellen einer Datei, Öffnen einer Datei, Umbenennen einer Datei, Verschieben einer Datei, Kopieren einer Datei, Löschen einer Datei, Suchen nach einer Datei, Verschlüsseln einer Datei, Archivieren einer Datei und/oder Modifizieren von einer/einem oder mehreren Dateiattributen, Eigenschaften oder Dateiberechtigungen und
wobei jede entsprechende aus den Benutzersitzungen einem Zeitraum zwischen dem Einloggen und Ausloggen eines bestimmten Systembenutzers in die/aus der Computernetzwerkumgebung entspricht.

19. Computersystem nach Anspruch 12, wobei der eine oder die mehreren Sitzungsüberwachungsagenten einen Sitzungsüberwachungsagenten für jede entsprechende aus den Benutzersitzungen in dem Computernetzwerk umfassen.

20. Computersystem nach Anspruch 12, wobei die Dateiabfangeinheit konfiguriert ist, um die Dateiverwaltungsinformationen derart zu filtern, dass etwaige Informationen, die temporäre Dateien betreffen oder umfassen, entfernt werden, bevor die Historien- und Exfiltrationsverfolgungseinheit die Dateiverwaltungsinformationen korreliert.

## Revendications

1. Procédé informatique pour faciliter la gestion du risque d'exfiltration de données dans un environnement de réseau informatique (100), le procédé informatique comprenant les étapes consistant à :
collecter des informations de gestion de fichiers informatiques associées à chacun respectif d'une pluralité de fichiers informatiques dans un environnement de réseau informatique d'une organisation à partir d'un système d'exploitation informatique (224) ;
collecter des informations d'activité d'utilisateur associées à chacune respective d'une pluralité de sessions d'utilisateur (226) par des utilisateurs ayant accès à l'environnement de réseau informatique de l'organisation, en utilisant une pluralité d'agents de surveillance de session (222) ;
mettre en corrélation au moins certaines des informations d'activité d'utilisateur collectées avec un ou plusieurs des fichiers informatiques associés aux informations de gestion de fichiers collectées ;
identifier les fichiers informatiques dans l'environnement de réseau informatique de l'organisation qui doivent être suivis à des fins d'évaluation du risque d'exfiltration de données par rapport aux fichiers informatiques identifiés pour un suivi ;
créer une chaîne d'historique de fichiers (234) pour chacun respectif des fichiers informatiques identifiés pour un suivi,
dans lequel la chaîne d'historique de fichiers pour chacun respectif des fichiers informatiques identifiés pour un suivi inclut les informations de gestion de fichiers collectées et l'une quelconque des informations d'activité d'utilisateur corrélées associées au fichier informatique respectif ; et
évaluer le risque d'exfiltration de données par rapport aux fichiers informatiques identifiés pour un suivi sur la base, au moins en partie, de certaines des informations de gestion de fichier et des informations d'activité d'utilisateur corrélées dans la chaîne d'historique de fichiers.

2. Procédé informatique selon la revendication 1, comprenant en outre l'étape consistant à :
présenter une alerte à un ou plusieurs utilisateurs particuliers du système si l'évaluation révèle que le risque d'exfiltration de données existe par rapport à un ou plusieurs des fichiers informatiques.

3. Procédé informatique selon la revendication 1, comprenant en outre l'étape consistant à :
empêcher une action d'utilisateur qui entraînerait une exfiltration de données associée à l'un des fichiers informatiques si l'évaluation révèle que le risque d'exfiltration de données existe par rapport au fichier informatique respectif.

4. Procédé informatique selon la revendication 1, dans lequel le risque d'exfiltration est évalué sans prendre en compte un quelconque contenu des un ou plusieurs fichiers informatiques.

5. Procédé informatique selon la revendication 1, dans lequel l'identification des fichiers informatiques devant être suivis pour une éventuelle exfiltration de données prend en compte pour chaque fichier informatique son emplacement de stockage d'origine dans l'environnement de réseau informatique de l'organisation, et/ou si des actions suspectes peuvent avoir été effectuées par un utilisateur sur le fichier informatique respectif.

6. Procédé informatique selon la revendication 1, dans lequel l'évaluation du risque d'exfiltration de données comprend l'étape consistant à :
utiliser un moteur de règles pour vérifier si une ou plusieurs actions particulières dans une chaîne d'historique de fichiers suivis ou des caractéristiques associées à un certain particulier des fichiers informatiques suivis créent le risque d'exfiltration de données.

7. Procédé informatique selon la revendication 1, dans lequel la mise en corrélation d'au moins certaines des informations d'activité d'utilisateur collectées avec un ou plusieurs des fichiers informatiques associés aux informations de gestion de fichiers collectées comprend l'étape consistant à :
comparer des informations d'horodatage, des identifiants de session, des identifiants d'utilisateur et/ou des identifiants de processus associés aux informations de gestion de fichiers informatiques collectées à des informations d'horodatage, des identifiants de session, des identifiants d'utilisateur et/ou des identifiants de processus associés aux informations d'activité d'utilisateur collectées.

8. Procédé informatique selon la revendication 1, dans lequel les informations de gestion de fichiers informatiques comprennent des informations sur une ou plusieurs des opérations suivantes consistant à :
créer un fichier, ouvrir un fichier, renommer un fichier, déplacer un fichier, copier un fichier, supprimer un fichier, rechercher un fichier, chiffrer un fichier, mettre un fichier dans une archive et/ou modifier un ou plusieurs attributs, une ou plusieurs propriétés ou autorisations de fichier.

9. Procédé informatique selon la revendication 1, dans lequel chacune respective des sessions d'utilisateur correspond à une période de temps entre une connexion d'utilisateur de système particulier à l'environnement de réseau informatique de l'organisation et une déconnexion ultérieure à partir de celui-ci.

10. Procédé informatique selon la revendication 1, dans lequel l'environnement de réseau informatique de l'organisation présente un pare-feu (104) qui restreint les communications entre l'environnement de réseau informatique et d'autres ressources et dispositifs informatiques en dehors de l'environnement de réseau informatique.

11. Procédé informatique selon la revendication 1, comprenant en outre l'étape consistant à :
filtrer les informations de gestion de fichiers informatiques pour supprimer toute information relative à ou incluant des fichiers temporaires avant la mise en corrélation.

12. Système informatique comprenant :
une pluralité de dispositifs d'accès utilisateur informatiques (108) et de ressources dans un réseau informatique (102) qui présente un pare-feu (104) ;
un système d'exploitation (224) pour prendre en charge des opérations informatiques au sein du réseau informatique ;
un système de détection et de réponse d'exfiltration (118) configuré pour interagir avec le système d'exploitation et pour faciliter la gestion du risque d'exfiltration de données dans le réseau informatique, dans lequel le système de détection et de réponse d'exfiltration comprend :
un intercepteur de fichiers (220) pour recevoir du système d'exploitation des informations de gestion de fichiers informatiques associées à chacun respectif d'une pluralité de fichiers informatiques dans le réseau informatique ;
un ou plusieurs agents de surveillance de session (222) pour collecter des informations d'activité d'utilisateur associées à chacune respective d'une pluralité de sessions d'utilisateur (226) sur le réseau informatique par des utilisateurs ayant accès au réseau informatique ;
un traceur d'historique et d'exfiltration (228) pour corréler au moins certaines des informations d'activité d'utilisateur collectées à un ou plusieurs des fichiers informatiques associés aux informations de gestion de fichiers reçues du système d'exploitation,
dans lequel le traceur d'historique et d'exfiltration identifie les fichiers informatiques qui doivent être suivis à des fins d'évaluation du risque d'exfiltration de données sur la base, pour chaque fichier informatique, de son emplacement de stockage d'origine dans le réseau informatique, et/ou si de quelconques actions suspectes ont été effectuées par un utilisateur sur le fichier informatique respectif, et,
dans lequel le traceur d'historique et d'exfiltration stocke, pour chacun respectif des fichiers informatiques identifiés pour un suivi, les informations de gestion de fichiers informatiques et de quelconques informations d'activité d'utilisateur qui ont été corrélées aux informations de gestion de fichiers informatiques dans une chaîne d'historique de fichiers (234) pour le fichier informatique respectif ; et
un moteur de règles (232) pour évaluer le risque d'exfiltration de données par rapport aux fichiers informatiques identifiés pour un suivi sur la base, au moins en partie, de certaines des informations de gestion de fichier et des informations d'activité d'utilisateur corrélées dans la chaîne d'historique de fichiers.

13. Système informatique selon la revendication 12, dans lequel le système de détection et de réponse d'exfiltration est configuré pour présenter une alerte à un ou plusieurs utilisateurs particuliers du système qui sont connectés au réseau informatique à partir de l'un quelconque des dispositifs d'accès d'utilisateur informatiques, en réponse à la détermination par le moteur de règles qu'un risque d'exfiltration existe par rapport à un certain particulier des fichiers informatiques.

14. Système informatique selon la revendication 12, dans lequel le système de détection et de réponse d'exfiltration est configuré pour empêcher une action d'utilisateur qui entraînerait une exfiltration de données, en réponse à la détermination par le moteur de règles qu'un risque d'exfiltration existe par rapport à un certain particulier des fichiers informatiques.

15. Système informatique selon la revendication 12, dans lequel le système de détection et de réponse d'exfiltration évalue le risque d'exfiltration de données sans tenir compte d'un quelconque contenu substantiel des un ou plusieurs fichiers informatiques.

16. Système informatique selon la revendication 12, dans lequel le moteur de règles évalue le risque d'exfiltration de données pour un certain particulier parmi les fichiers informatiques suivis en vérifiant si une ou plusieurs actions ou caractéristiques particulières associées à ce fichier informatique créent le risque d'exfiltration de données.

17. Système informatique selon la revendication 12, dans lequel le traceur d'historique et d'exfiltration met en corrélation au moins certaines des informations d'activité d'utilisateur collectées avec un ou plusieurs des fichiers informatiques associés aux informations de gestion de fichiers collectées en :
comparant des informations d'horodatage, des identifiants de session, des identifiants d'utilisateur et/ou des identifiants de processus associés aux informations de gestion de fichiers informatiques reçues à des informations d'horodatage, des identifiants de session, des identifiants d'utilisateur et/ou des identifiants de processus associés aux informations d'activité d'utilisateur collectées.

18. Système informatique selon la revendication 12, dans lequel les informations de gestion de fichiers informatiques comprennent des informations sur une ou plusieurs des opérations suivantes consistant à :
créer un fichier, ouvrir un fichier, renommer un fichier, déplacer un fichier, copier un fichier, supprimer un fichier, rechercher un fichier, chiffrer un fichier, mettre un fichier dans une archive et/ou modifier un ou plusieurs attributs, une ou plusieurs propriétés ou autorisations de fichier, et
dans lequel chacune respective des sessions d'utilisateur correspond à une période de temps entre une connexion d'utilisateur de système particulier au réseau informatique et une déconnexion à partir de celui-ci.

19. Système informatique selon la revendication 12, dans lequel les un ou plusieurs agents de surveillance de session comprennent un agent de surveillance de session pour chacune respective des sessions d'utilisateur dans le réseau informatique.

20. Système informatique selon la revendication 12, dans lequel l'intercepteur de fichiers est configuré pour filtrer les informations de gestion de fichiers de manière à supprimer de quelconques informations liées à ou incluant des fichiers temporaires avant que l'historique et le traceur d'exfiltration ne mettent en corrélation les informations de gestion de fichiers.
